(19) Europäisches Patentamt / European Patent Office / Office européen des brevets

(11) **EP 4 614 450 A1**

(12) **EUROPEAN PATENT APPLICATION**
published in accordance with Art. 153(4) EPC

(43) Date of publication:
**10.09.2025  Bulletin 2025/37**

(21) Application number: **23897738.3**

(22) Date of filing: **27.11.2023**

(51) International Patent Classification (IPC):
**G06T 17/30** *(2006.01)*     **G06T 7/00** *(2017.01)*

(52) Cooperative Patent Classification (CPC):
**G06T 7/00; G06T 17/30**

(86) International application number:
**PCT/JP2023/042413**

(87) International publication number:
**WO 2024/117090 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.11.2022   JP 2022192147**

(71) Applicant: **Morgenrot Inc.**
**Tokyo 102-0083 (JP)**

(72) Inventors:
• **NAKAMURA Masamichi**
**Tokyo 102-0083 (JP)**
• **INOUE Hirotaka**
**Tokyo 102-0083 (JP)**

(74) Representative: **Appleyard Lees IP LLP**
**15 Clare Road**
**Halifax HX1 2HY (GB)**

(54) **INFORMATION PROCESSING DEVICE, INFORMATION PROCESSING METHOD, AND PROGRAM**

(57)     A depth data acquisition unit 50 acquires, for each of N (N is an integer value of two or more) viewpoints, depth data indicating the depth from a predetermined viewpoint to a feature point of an object. An implicit function generation unit 60 performs predetermined machine learning using N depth data to generate an implicit function S(r), which is a function of distance from an arbitrary viewpoint to a feature point on the surface of an object T.

FIG. 6

EP 4 614 450 A1

**Description**

TECHNICAL FIELD

The present invention relates to an information processing device, an information processing method, and a program.

BACKGROUND ART

There have conventionally been techniques for generating a three-dimensional model from two-dimensional images (multitude of two-dimensional images) including a subject (see, for example, Patent Document 1 and Non-Patent Document 1).

Citation List

Patent Document

Patent Document 1: Japanese Unexamined Patent Application, Publication No. 2010-145186

Non-Patent Document

Non-Patent Document 1: Thomas M. et Al., "Instant Neural Graphics Primitives with a Multiresolution Hash Encoding", ACM Trans. Graph., Vol.4, Num.4, pp.102:1--102:15, July 2022, https://doi.org/10.1145/3528223.3530127

DISCLOSURE OF THE INVENTION

Problems to be Solved by the Invention

However, prior arts including Patent Document 1 and Non-Patent Document 1 cannot sufficiently meet needs pertaining to the accuracy in the generation of a three-dimensional model and the generation speed thereof.
The present invention was arrived at in view of such a situation, and an object thereof is to achieve a more convenient generation methodology for, for example, improving the accuracy and reducing calculation costs when generating a three-dimensional model of an object.

Means for Solving the Problems

In order to achieve the object noted above, an information processing device according to one aspect of the present invention includes:

a depth data acquisition unit for acquiring, for each of N (N is an integer value of two or higher) viewpoints, a piece of depth data indicating a depth from a prescribed viewpoint to a feature point of an object; and
a distance function generation unit for generating, by performing prescribed machine learning using the N pieces of depth data, a function for estimating the distance from an arbitrary viewpoint to a feature point on the surface of the object.

An information processing method and a program according to one aspect of the present invention correspond to the above-noted information processing device according to one aspect of the present invention.

Effects of the Invention

The present invention can improve the convenience in the generation of a three-dimensional model using two-dimensional images.

BRIEF DESCRIPTION OF THE DRAWINGS

FIG. 1 is a schematic view illustrating a processing operation performed by a model generation device according to one embodiment of an information processing device of the present invention;

FIG. 2 illustrates an example of a disposition method for a camera and a lidar for acquiring depth data and image data in a subject service depicted in FIG. 1;

FIG. 3 is a block diagram illustrating an example of the hardware configuration of a model generation device applied to the subject service described by referring to FIG. 1, namely, a model generation device according to one embodiment of the information processing device of the present invention;

FIG. 4 is a functional block diagram illustrating a first embodiment of the functional configuration of the model generation device having the hardware configuration depicted in FIG. 3;

FIG. 5 illustrates an example of blocks for three-dimensional model generation performed by the model generation device having the functional configuration in FIG. 4;

FIG. 6 is a functional block diagram illustrating a second embodiment of the functional configuration of the model generation device having the hardware configuration depicted in FIG. 3; and

FIG. 7 is a schematic view illustrating a processing operation performed by the model generation device according to the second embodiment that has the functional configuration in FIG. 6.

PREFERRED MODE FOR CARRYING OUT THE INVENTION

The following describes embodiments of the present invention by referring to the drawings.

Embodiments of the information processing device of the present invention are based on the premise of using an algorithm for generating a three-dimensional model on the basis of two-dimensional images. In particular, a service (hereinafter referred to as the "subject service") to which embodiments of the information processing device of the present invention are applied involves acquiring two-dimensional images of a prescribed object present in the real world, and generating a three-dimensional model from the two-dimensional images.

First, descriptions are given of the conventional basic technique described in Patent Document 1 and the like. In the conventional photogrammetric technique, an algorithm is employed for extracting feature points from a plurality of images obtained by imaging an object from a plurality of viewpoints, generating point clouds in a three-dimensional space by associating the feature points of the plurality of images, and adding point clouds in accordance with points other than the feature points, thereby generating a three-dimensional image. Such an algorithm is, so to speak, an algorithm for performing linear complementing that recomposes the distances from some viewpoints to feature points as a point cloud in a three-dimensional space on the basis of the triangulation technique. Thus, the prior art described in Patent Document 1 and the like has the problem of extremely low reproducibility of the angle between images.

In this regard, neural radiance fields (NeRFs) using a neural network and methodologies (algorithms) obtained by developing NeRFs have been proposed recently with the development of machine learning techniques. An NeRF is an algorithm capable of performing non-linear complementing between a plurality of viewpoints by means of a neural network. More specifically, the NeRF can initially generate coarse lattice cells so as to perform training processing, and perform training so as to generate fine lattice cells from the result of the training processing, thereby outputting a final three-dimensional model as a training result.

In addition, in a methodology (algorithm) called Instant-NGP that is described in Non-Patent Document 1, training data is encoded using a hash function during training processing so that, for example, training processing that would require about three days to be completed in the conventional NeRF can be completed in several seconds.

The present invention enhances the speed of training processing for generating a three-dimensional model in comparison with such prior arts.

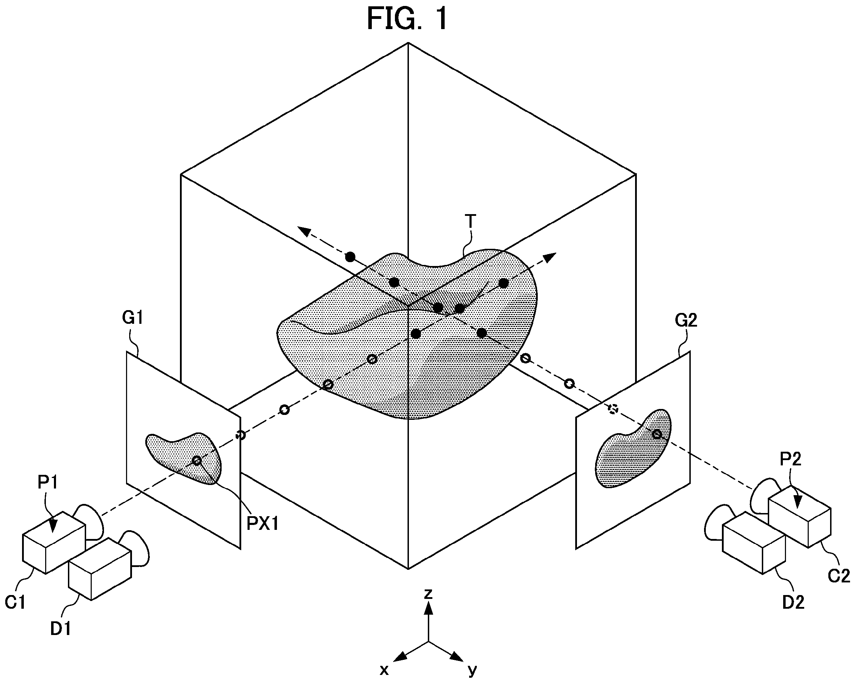

The example of FIG. 1 is described with respect to the overview of the flow of the generation of a three-dimensional model according to the subject service. FIG. 1 depicts, in a three-dimensional space, an object T for which a three-dimensional model is to be generated according to the subject service.

According to the subject service, a three-dimensional model of the object T is generated using depth data obtained as a result of performing measurement from N viewpoints (N is an integer value of two or higher) by using lidars and image data pertaining to captured images captured using cameras at M viewpoints (M is an integer value of N or lower).

Although the depth data and the image data may be acquired at different points in time, the following descriptions are given on the assumption that a set of depth data and image data acquired concurrently at certain viewpoints is used in order to facilitate the understanding of descriptions of FIG. 1. Descriptions of FIG. 1 are based on the assumption that N=M=2 is satisfied, and the descriptions are given by referring to two viewpoints P1 and P2. When a plurality of locations do not need to be distinguished from each other, the plurality of locations are collectively referred to as locations P.

When acquiring depth data and image data from the same viewpoint, the following methodologies can be used. In particular, in a first methodology, for example, a camera C1 is installed at the viewpoint P1 in FIG. 1, and image data is acquired from the camera C1; and then a depth meter such as a LiDAR (hereinafter referred to as a "lidar") D1 is installed at the viewpoint P1, and depth data is acquired from the lidar D1. As a result, a set of two pieces of data from the same viewpoint, i.e., depth data and image data, is acquired.

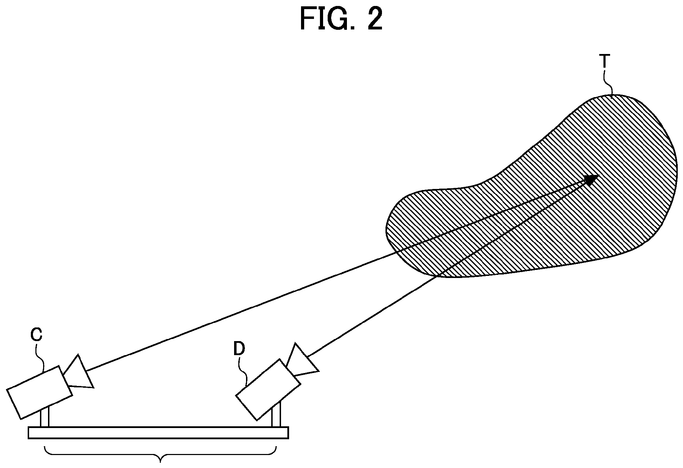

FIG. 2 illustrates an example of a disposition method for a camera and a lidar for acquiring depth data and image data in the subject service depicted in FIG. 1. In a second methodology, for example, the camera C1 and the lidar D1 are each fixed by a prescribed jig in advance as depicted in FIG. 2, and the camera C1 is disposed at the viewpoint P1. Next, image data is acquired from the camera C1 concurrently with acquiring depth data from the lidar D1. Then, the relative positions of the camera C1 and the lidar D1 based on the prescribed jigs and the direction of measurement (line of sight) are calibrated so as to acquire depth data and image data from the same viewpoint. In this regard, since the image data and the depth data are associated with the same viewpoint as a result of the calibration, it can be said that the image data and the depth data are synchronous with each other. Note that the following descriptions are given on the assumption that the subject service employs the second methodology.

First, a captured image G1 obtained as a result of imaging the object T by using the camera C1 from the viewpoint P1 in the positive direction of the axis X of the object T is captured. Concurrently, depth data from a viewpoint synchronous with the viewpoint P1 is acquired using the lidar D1. As described above, the depth data is calibrated, as appropriate. The captured image G1 includes information on the shape and the color of the object T as viewed from the viewpoint P1.

Subsequently, a captured image G2 obtained as a result of imaging the object T by using a camera C2 from the viewpoint P2 in the positive direction of the axis Y of the object T is captured. Concurrently, depth data from a viewpoint synchronous with the viewpoint P2 is acquired using the lidar D2. As described above, the depth data is calibrated, as appropriate. The captured image G2 includes information on the shape and the color of the object T as viewed from the viewpoint P2.

Although descriptions of FIG. 1 have been given on the assumption that the camera C1 and the lidar D1 are used at the viewpoint D1 and the camera C2 and the lidar D2 are used at the viewpoint V2, the camera C1 and the lidar D1 may be moved from the viewpoint P1 to the viewpoint P2 and used as the camera C2 and the lidar D2 so as to successively acquire image data and depth data. When, as in such a situation, cameras and lidars at a plurality of locations do not need to be distinguished from each other, the cameras and the lidars are collectively referred to as "cameras C" and "lidars D." In such a situation, images captured by the cameras C are referred to as "captured images G."

In the conventional methodology described in Patent Document 1 and the like, for example, a three-dimensional model is generated using only image data pertaining to a plurality of captured images such as the captured images G1 and G2, so it is difficult to complement, for example, shaded portions of an image. Even the methodology described in Non-Patent Document 1 and the like requires a certain length of calculation time or massive calculation resources when generating a higher-definition three-dimensional model.

In the subject service, as described hereinafter in detail, a three-dimensional model of an object T is generated as noted above by using image data pertaining to captured images G acquired by cameras C at a plurality of viewpoints P and depth data acquired by lidars D. Accordingly, the subject service can generate a three-dimensional model faster.

FIG. 1 depicts an arrow extending from the viewpoint P1 through a prescribed pixel PX1 of the captured image G1 by using an alternate long and two short dashes line. White circles and black circles are depicted on points on the arrow indicated by an alternate long and two short dashes line.

The points indicated by white circles on the arrow indicate that these points precede the contact with the object T as viewed from the viewpoint P1. The points indicated by black circles on the arrow indicate that these points follow the contact with the object T as viewed from the viewpoint P1.

Thus, assuming, for example, that an entity is traveling from the viewpoint P1 along the arrow indicated by an alternate long and two short dashes line, the entity does not collide with anything while extending from the viewpoint P1 through the points indicated by white circles on the arrow, because of the nonexistence of the object T. The entity collides with the object T between the points indicated by white circles on the arrow and the points indicated by black circles on the arrow. The color of the point where the entity collides with the object T is recorded as the color of the prescribed pixel PX1 of the captured image G1. In a case where the object T is opaque, the points following the point of the initial black circle are not imaged in the captured image G1. Accordingly, the point of the position where the arrow (straight line) extending from the viewpoint P1 through the prescribed pixel PX1 collides with the object T is associated with the color of the object T.

In the subject service, as described above, depth data from the viewpoint P1 is concurrently measured. Thus, the distance between the point of a white circle and the point of a black circle is acquired as depth data. In the subject service, a three-dimensional model is generated in consideration of limited regions, thereby enhancing the speed of the generation of the three-dimensional model.

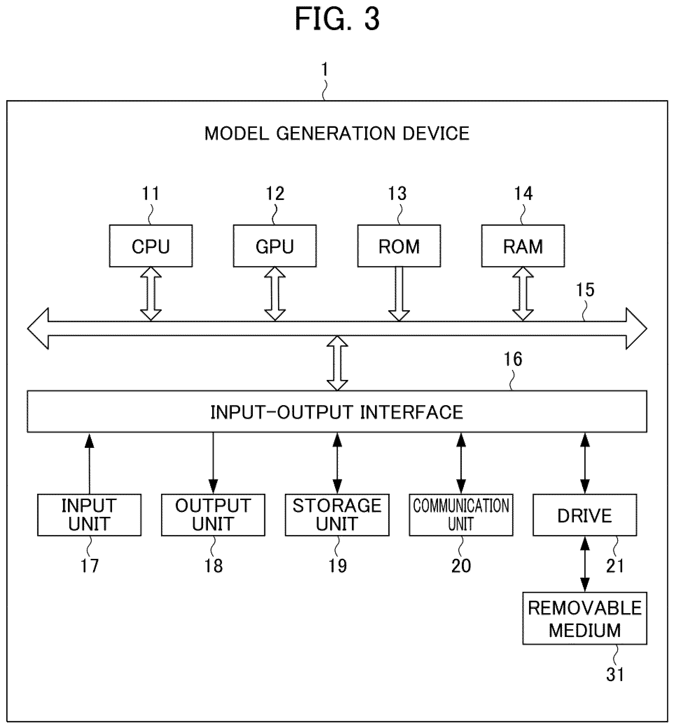

The overview of the subject service has been described so far by referring to FIGS. 1 and 2. By referring to FIGS. 3 to 5, the following describes a model generation device to which the subject service is applied.

FIG. 3 is a block diagram illustrating an example of the hardware configuration of a model generation device applied to the subject service described by referring to FIG. 1, namely, a model generation device according to one embodiment of the information processing device of the present invention. A model generation device 1 includes a CPU 11, a GPU 12, a ROM 13, a RAM 14, a bus 15, and an input-output interface 16, an input unit 17, an output unit 18, a storage unit 19, a communication unit 20, and a drive 21.

The CPU 11 and the GPU 12 perform various types of processing in accordance with a program recorded in the ROM 13 or a program loaded from the storage unit 19 into the RAM 14. The GPU 12 has a compute unit for performing software processing and an RT core for performing hardware processing. The RT core performs, by means of hardware, ray tracing in a prescribed three-dimensional space including an object. The RAM 14 also appropriately stores, for example, data required for the CPU 11 and the GPU 12 to perform various types of processing.

The CPU 11, the GPU 12, the ROM 13, and the RAM 14 are connected to each other via the bus 15. The input-output interface 16 is also connected to the bus 15. The input unit 17, the output unit 18, the storage unit 19, the communication unit 20, and the drive 21 are connected to the input-output interface 16.

The input unit 17 is formed from, for example, a keyboard and a mouse and allows an input of various types of information. The output unit 18 is formed from, for example, a display and a speaker and outputs various types of information in the form of an image or sound.

The storage unit 19 is formed from, for example, a hard disk and a dynamic random access memory (DRAM) and stores various types of data. The communication unit 20 communicates with other devices over networks, including the Internet.

The drive 21 is appropriately mounted with a removable medium 31 formed from, for example, a magnetic disk, an optical disc, a magneto-optical disk, or a semiconductor memory. A program read from the removable medium 31 by the drive 21 is installed on the storage unit 19 as necessary. As with the storage unit 19, the removable medium 31 may also store various types of data stored by the storage unit 19.

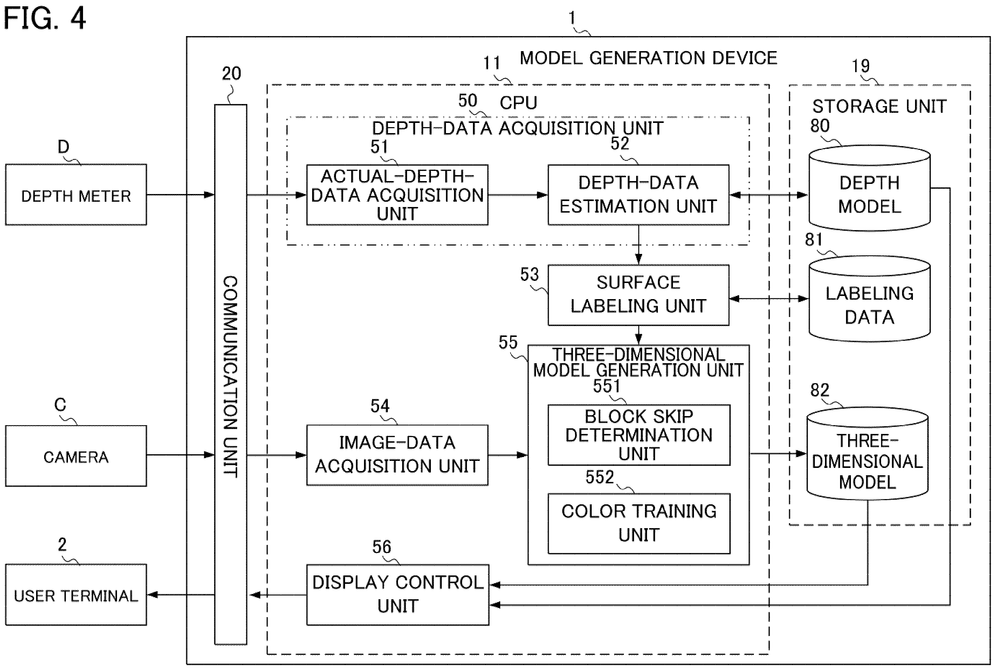

By referring to FIG. 4, the following describes the functional configuration of the model generation device 1 having the hardware configuration depicted in FIG. 3. FIG. 4 is a functional block diagram illustrating an example of the functional configuration of the model generation device in FIG. 3.

As depicted in FIG. 4, a depth-data acquisition unit 50, an actual-depth-data acquisition unit 51, a depth-data estimation unit 52, a surface labeling unit 53, an image-data acquisition unit 54, a three-dimensional model generation unit 55, and a display control unit 56 function in the CPU 11 of the model generation device 1. A depth model 80, labeling data 81, and a three-dimensional model 82 are stored in one region of the storage unit 19.

The depth-data acquisition unit 50 acquires depth data pertaining to the depths from prescribed N viewpoints to an object T. The depth data includes information on the depths from the prescribed viewpoints to a feature point of the object T.

The following describes an example of the functional configuration of the depth-data acquisition unit 50 by referring to FIG. 4. The depth-data acquisition unit 50 has the actual-depth-data acquisition unit 51 and the depth-data estimation unit 52. The actual-depth-data acquisition unit 51 acquires M pieces of actual depth data obtained as a result of performing measurement from M viewpoints in the real world. In particular, the actual-depth-data acquisition unit 51 acquires M pieces of actual depth data obtained as a result of performing measurement from M viewpoints by using lidars D in the real world. The depth-data estimation unit 52 estimates N pieces of depth data on the basis of the M pieces of actual depth data acquired by the actual-depth-data acquisition unit 51, and acquires the N pieces of estimated depth data. Specifically, for example, the depth-data estimation unit 52 generates or updates a three-dimensional depth model 80 of the object T by performing training processing by means of an algorithm relying on a neural network on the basis of the M pieces of actual depth data acquired by the actual-depth-data acquisition unit 51. The three-dimensional depth model 80 of the object T can infer depth data pertaining to a depth from a prescribed viewpoint. The depth model 80 is stored in one region of the storage unit 19 so as to be managed.

The surface labeling unit 53 generates labeling data 81 indicating the result of labeling the surface of the object T on the basis of the N pieces of depth data acquired by the depth-data acquisition unit 50. Labeling refers to recording the position of the surface of the object T in a three-dimensional space at a position in a three-dimensional virtual space for which a three-dimensional model is generated. The labeling data 81 is stored in one region of the storage unit 19 so as to be managed.

The image-data acquisition unit 54 acquires image data pertaining to M captured images G obtained as a result of imaging the object T from viewpoints P synchronous with M (M is an integer value of N or lower) viewpoints from among the N viewpoints.

The three-dimensional model generation unit 55 generates a three-dimensional model 82 pertaining to the object T on the basis of the labeling data 81 and the M pieces of image data acquired by the image-data acquisition unit 54. The three-dimensional model 82 is stored in one region of the storage unit 19 so as to be managed. The three-dimensional model generation unit 55 has a block skip determination unit 551 and a color training unit 552.

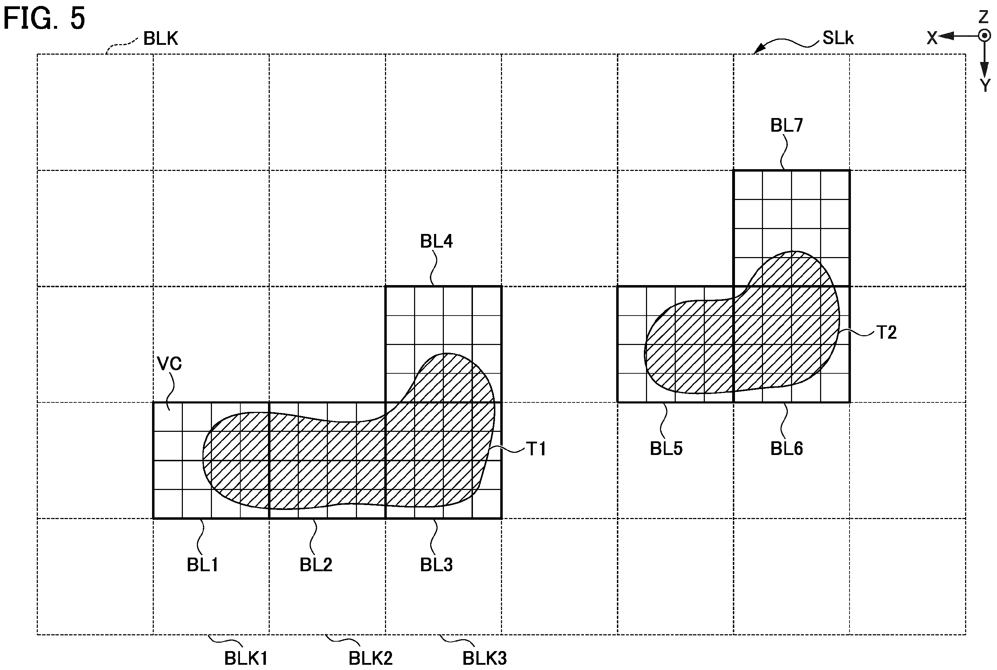

When generating training data for generating a three-dimensional model, the block skip determination unit 551 determines, on the basis of the labeling data 81, whether the surface of the object T is present in a block passed by a line of sight (arrow indicated by an alternate long and two short dashes line in FIG. 1) corresponding to a line from a viewpoint P to a prescribed pixel of a captured image G. In a case where the block skip determination unit 551 has determined that the surface of the object T is not present in the block, the block does not contribute to the color of the prescribed pixel of the captured image G. By contrast, in a case where the block skip determination unit 551 has determined that the surface of the object T is present in the block, the block has a likelihood of contributing to the color of the prescribed pixel of the captured image G. Data for training is generated for a block determined as contributing to the color of the prescribed pixel by the block skip determination unit 551. Descriptions of examples of blocks skipped by the block skip determination unit 551 are given hereinafter by referring to FIG. 5.

The color training unit 552 generates or updates the three-dimensional model 82 by performing training for the imparting of a color to the three-dimensional model 82 by using the training data generated on the basis of the determination result from the block skip determination unit 551. Specifically, according to the training data used by the color training unit 552, as indicated above, the training processing is not performed (not substantially performed) for blocks not contributing to the color of a prescribed pixel of the captured image G. Thus, the time required for the training processing by the color training unit 552 is shortened.

Accordingly, the use of depth data in three-dimensional modeling omits training for spaces (spaces of individual blocks) in which the object T is not present, thereby achieving high-speed modeling. Meanwhile, during modeling, when generating lattice cells (voxels) of higher definition than blocks, minute voxels are provided in spaces in which the surface of a body is labeled, i.e., spaces (spaces of individual blocks) in which the object T is present. In this way, high-definition and high-speed modeling can be achieved.

The display control unit 56 performs control for displaying the three-dimensional model 82 pertaining to the object T on a user terminal 2 by causing the vicinity of the object T to be subjected to rendering processing on the basis of the depth model 80. Thus, in rendering the three-dimensional model 82, the rendering of regions not affecting the color of the three-dimensional model 82 when the three-dimensional model 82 is viewed from individual directions is omitted, thereby enhancing the speed of generation and displaying of the image.

The display control unit 56 can perform control for displaying a rendered image maintained in a network representation generated with respect to the three-dimensional model 82 pertaining to the object T. In this regard, the three-dimensional model 82 pertaining to the object T in the network representation refers to a representation form of a function created by a neural network. For example, the representation form of a function created by the neural network is also referred to as an implicit function representation. Converting the three-dimensional model 82 into a form using, for example, voxels, meshes, or polygons leads to a massive data size. However, the three-dimensional model 82 in the implicit function representation is small in data size. Thus, employing the network representation (implicit function representation) provides the advantage of achieving a high transfer rate when exchanging data on the three-dimensional model 82 (e.g., when performing download via the Internet). Accordingly, the display control unit 56 can perform control for displaying the three-dimensional model 82 of the object T while maintaining the same in the network representation without rendering the three-dimensional model 82 again.

So far, descriptions have been given of the model generation device to which the subject service is applied by referring to FIGS. 3 to 5. The following more specifically describes the process for enhancing the speed of three-dimensional model generation in the subject service. FIG. 5 illustrates an example of blocks for three-dimensional model generation performed by the model generation device having the functional configuration in FIG. 4.

First, descriptions are given of the concepts of blocks and voxels by referring to FIG. 5. The coarse lattice cells depicted in FIG. 5 indicate the boundaries of blocks segmenting, in a lattice pattern, the three-dimensional virtual space in FIG. 1 in which the object T is disposed. The fine lattice cells depicted in FIG. 5 indicate boundaries segmenting the three-dimensional virtual space by using lattice cells finer than the blocks.

The slice SLk depicted in FIG. 5 is an arrangement of blocks BL or voxels VC at a certain coordinate on the axis Z. In other words, regions obtained as a result of segmenting the slice SLk into sections each equivalent to a prescribed first unit are each a voxel VC. Assuming, for example, that the voxels VC are associated with the resolution of the finally generated three-dimensional model 82, performing the generation processing for the three-dimensional model in units of voxels VC will be inefficient. Accordingly, regions obtained as a result of segmenting the slice SLk into sections each equivalent to a second unit, which is larger than the first unit, i.e., regions each formed from a group of n voxels, are introduced as blocks BL1 to BL7 and BLK. In the example in FIG. 5, n is 8 in total, with four in the direction of the axis X, four in the direction of the axis Y, and one in the direction of axis Z. n is hereinafter represented by $x \times Y$, in view of one in the direction of axis Z. Thus, the blocks BL1 to BL7 are each formed from voxels VC of $n=4 \times 4$. When a plurality of voxels do not need to be distinguished from each other, the voxels are hereinafter referred to as "voxels VC." Similarly, when the blocks BL1 to BL7 and the like do not need to be distinguished from each other, the blocks are hereinafter referred to as "blocks BL."

The regions of blocks BL indicated by bold lines in FIG. 5 may possibly include two portions T1 and T2 of the object T. In particular, the blocks BL that may possibly include the surface of the object T and the blocks BLK of empty spaces are distinguished from each other on the slice SLk. The former blocks BL are reflected in the pixel value (color) of prescribed pixels of the captured image G, while the latter blocks BLK are not reflected therein. Accordingly, the former blocks BL are hereinafter referred to as "to-be-processed blocks BL," and the latter blocks BLK are hereinafter referred to as "not-to-be-processed blocks BLK."

In order to facilitate the understanding of the present invention, FIG. 5 depicts "to-be-processed blocks BL" by using bold lines, and depicts "not-to-be-processed blocks BLK" by using broken lines. Note that FIGS. 3 to 5 depict only "to-be-processed blocks BL." Specifically, in the example in FIG. 2, for example, regions that may possibly include two portions T1 and T2 of the object T are present within the slice SLk. Four to-be-processed blocks BL1 to BL4 are depicted as regions that may possibly include the portion T1 of the object T. Three to-be-processed blocks BL5 to BL7 are depicted as regions that may possibly include the portion T2 of the object T.

The surface labeling unit 53 described with reference to FIG. 4 performs labeling by determining blocks BL that may possibly include, as noted above, the surfaces of the portions T1 and T2 of the object T. The blocks surrounded by thick frames indicate that the blocks have been labeled as having the surface of the object T present therein.

The three-dimensional model generation unit 55 generates data for training (modeling) such that training (modeling) is performed for color information pertaining to to-be-processed blocks BL while training processing is not performed for color information pertaining to not-to-be-processed blocks BLK, thereby generating or updating a three-dimensional model 82. In this way, the speed of the process of generating or updating a three-dimensional model 82 is enhanced. In particular, for, for example, a captured image G (e.g., the captured image G2 in FIG. 1) obtained by imaging the portion T1 of the object T from the positive direction of the axis Y, data for training is generated such that training is not performed for the not-to-be-processed blocks BLK1 to BLK3.

The following describes a model generation device of a second embodiment pertaining to the information processing device according to the present invention. With respect to the first embodiment, descriptions have been given of examples in which a three-dimensional model is generated from photographic data (color image) and depth data, and descriptions have also been given of the fact that a three-dimensional model in the implicit function representation may be generated using a neural network. However, the second embodiment is described by referring in more detail to examples in which a three-dimensional model is generated from depth data when, unlike in the first embodiment, photographic data, namely, colored image data, cannot be acquired. In the second embodiment, specifically, a map of two or more pieces of depth data obtained by measuring distances to an object T from different directions is stored in the neural network, and the distances to the surface of the object T from directions in which a depth is not measured are estimated so as to generate a map of distances from different directions, so that a three-dimensional black-and-white body can be reproduced. In the second embodiment, in particular, a depth sensor such as a LiDAR acquires depth information pertaining to the object T in the form of a point cloud, and interpolation is performed for data on the point cloud by using a machine learning methodology based on a neural network, thereby generating a three-dimensional model represented by an implicit function. Accordingly, calculation costs and the data size can be reduced in comparison with three-dimensional models in a voxel form, such as that in the first embodiment.

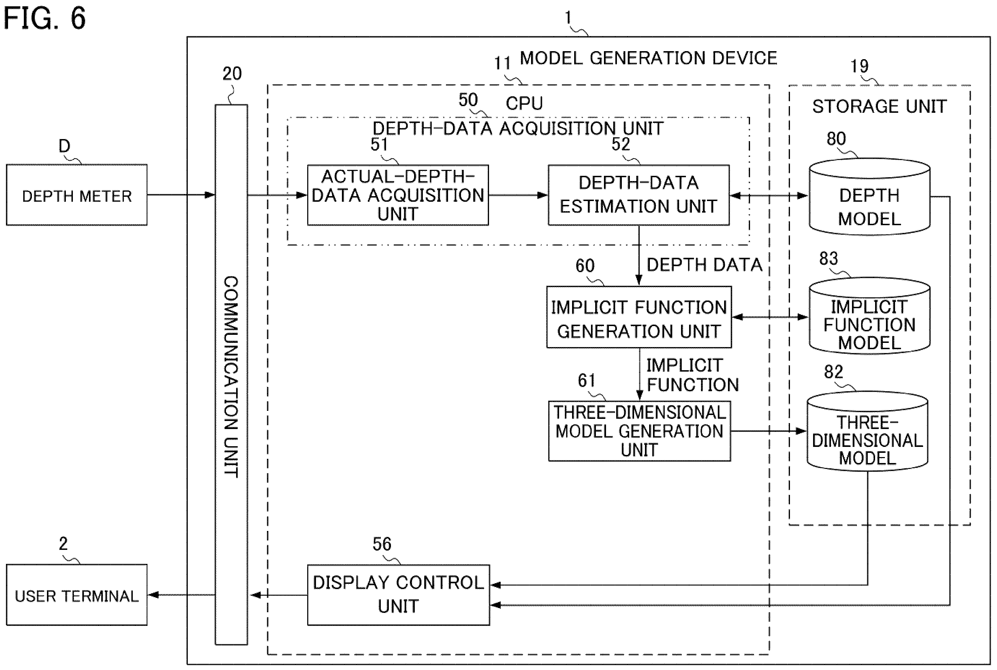

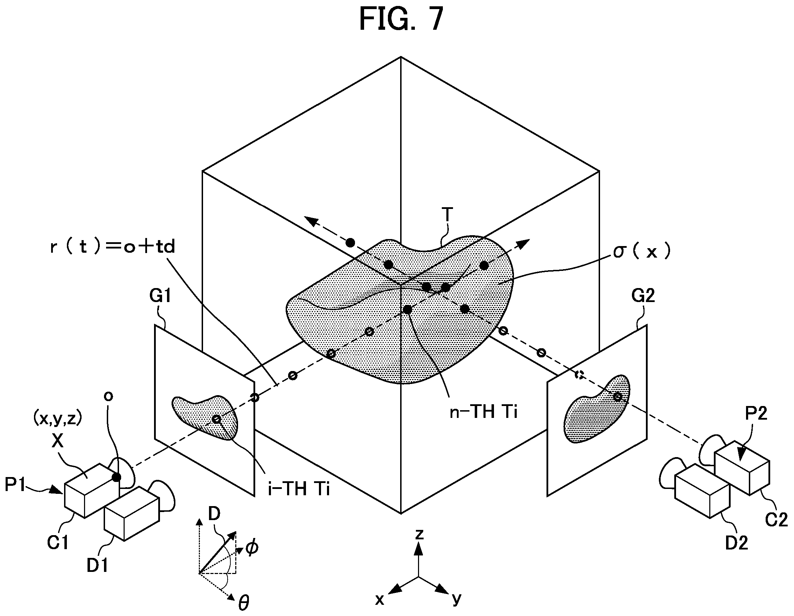

The following specifically describes the model generation device according to the second embodiment by referring to FIGS. 6 and 7. FIG. 6 is a functional block diagram illustrating the second embodiment of the functional configuration of a model generation device having the hardware configuration depicted in FIG. 3. FIG. 7 is a schematic view illustrating a processing operation performed by the model generation device according to the second embodiment that has the functional configuration in FIG. 6.

When the model generation device 1 according to the second embodiment performs the process of generating a three-dimensional model of an object T, a depth-data acquisition unit 50, an implicit function generation unit 60, and a three-dimensional model generation unit 61 function in a CPU 11, as depicted in FIG. 6.

For example, for each of N viewpoints (N is an integer value of two or higher), the depth-data acquisition unit 50 acquires depth data indicating the depths from the viewpoints P1 and P2 (prescribed viewpoints) in FIG. 7 to feature points of the object T (specifically, depth data obtained through measurement by the lidars D1 and D2).

For example, the implicit function generation unit 60 performs, as prescribed machine learning, training using an implicit function model 83 (neural network). During the training, the implicit function generation unit 60 inputs depth data to the implicit function model 83 as trainer data from different directions so as to cause machine learning to be performed, so that the accuracy of an implicit function to be output from the implicit function model 83 can be enhanced. Specifically, training is performed with the function indicating whether a body is present at a position indicated by input depth data, so as to estimate a distance function indicating which distance the surface of the shape of the body is three-dimensionally positioned at.

When actually generating a three-dimensional model, depth data acquired by the depth-data acquisition unit 5 is supplied to the implicit function model 83 as input, and an implicit function output from the implicit function model 83 is output to the three-dimensional model generation unit 61.

The three-dimensional model generation unit 61 models (generates) a three-dimensional model 82 of the object T on the basis of the implicit function generated (output) by the implicit function generation unit 60, and stores the same in the implicit function representation in the storage unit 19.

In the second embodiment, the display control unit 56 performs control for displaying the three-dimensional shape of the object T while maintaining the same in the network representation (implicit function representation) without rendering the three-dimensional model 82 of the object T again.

In the second embodiment, the three-dimensional model 82 is stored in the implicit function representation. With respect to the model generation device 1, when an object is observed from a plurality of viewpoints, the distances from the respective viewpoints to the body surface are observed. For example, when observation is performed from the viewpoint P1, observation is performed as to how distant from the observation position a point on the body is. As an example, the observation value is represented by a grayscale image, and locations without a body are represented by black, while locations close to the body are represented by white.

The model generation device 1 can estimate the distance to a body from a viewpoint for which an observation value has not been obtained. It should be assumed that the observation values from the viewpoints P1 and P2 from among the viewpoints depicted in FIG. 7 have been obtained. In this situation, the distances from the viewpoints P1 and P2 to certain points on the object T are obtained. However, no distances from other viewpoints have been observed, and similarly, the distances from the other viewpoints have not been observed, so it is difficult to generate a three-dimensional model of the object T by using the observation values from two directions alone.

Accordingly, the distances from viewpoints other than the viewpoints P1 and P2 need to be estimated. In existing methodologies such as photogrammetry, data on other viewpoints would be complemented from data on the viewpoints P1 and P2 in accordance with a function, thereby estimating the distance from the other viewpoints to the body surface. When actually generating a three-dimensional model of the object T, observation values from more viewpoints would be used to estimate the distances to the object surface from viewpoints at which observation is not performed. However, if the position coordinates of a viewpoint and the angle with respect to the object T are variables, the function of the distance to the surface of the object T would be nonlinear, and it would be difficult to estimate the distance.

Accordingly, by using a machine learning methodology such as the implicit function model 83 (neural network), the model generation device 1 according to the second embodiment estimates the distances to the surface of the object T from viewpoints at which observation is not performed. The estimation based on the neural network is suitable for estimating a nonlinear function by interpolation, and allows for more accurate estimation than the existing complementing methodologies.

FIG. 7 is a schematic view of a depth measurement model of the model generation device according to the second embodiment that has the functional configuration in FIG. 6.

In the model generation device 1 according to the second embodiment, the depth-data acquisition unit 50 acquires pieces of depth data from two or more directions in which a depth meter D such as a LiDAR has performed observation, and outputs the pieces of depth data to the implicit function generation unit 60. The implicit function generation unit 60 supplies, to the implicit function model 83 as input, depth data from two or more directions that has been output from the depth-data acquisition unit 50, thereby causing the implicit function model 83 to estimate the distance to the surface of the body and output an implicit function corresponding to the distance. The implicit function generation unit 60 receives the implicit function output from the implicit function model 83 and outputs the same to the three-dimensional model generation unit 61. Upon receipt of the implicit function, the three-dimensional model generation unit 61 generates a three-dimensional model 82 of volume data in the implicit function representation, and stores the same in the storage unit 19. Meanwhile, at a request from the user terminal 2, the three-dimensional model generation unit 61 reads the three-dimensional model 82 from the storage unit 19 and outputs the same to the user terminal 2 via the display control unit 56 by using a rendering methodology such as volume rendering. As a result, the three-dimensional body is reproduced in white and black on, for example, the display of the user terminal 2.

A plurality of methods may be used for the interpolation of an observation value by the implicit function model 83, and the following method may be used as an example. A straight line extending to one point on an object is represented as $r(t)=o+td$, where $x=(x, y, z)$ is the coordinates of an observation device such as a LiDAR, and $d=(\theta, \varphi)$ is the angle of the observation plane with respect to the body. Symbol o is the origin of coordinates. S(r), which is a function of the distance to the surface of the object T, is represented by the following equations (1), where $\sigma(x)$ is the density of the body.

$$S(\boldsymbol{r}) = \int_{ti}^{tn} T(t)\,\sigma(\boldsymbol{r}(t))dt$$

$$T(t) = \exp\left(-\int_{ti}^{t} \sigma(\boldsymbol{r}(s))ds\right)$$

equations (1).

In equations (1), T(t) is a function of variable t. T(t) is a function for eliminating the influence of the far side of the object as viewed from a specific viewpoint. Integrating T(t) generates a function that, when the object is observed from a certain viewpoint, has values on the body surface and assumes relatively low values at points in the space other than the body surface. T(t) is determined from distance function S(r). Distance function S(r) represents where the body is present when viewed from a certain plane. Clarifying the two allows the body to be defined by determining the position (x, y, z), θ, and φ. Generating distance function S(r), including T(t), by means of the implicit function model 83 (neural network) allows a three-dimensional model 82 of the object T to be generated.

As indicated in FIG. 7, for example, assuming that the lidar D1 at the position of the viewpoint P1 is an observation device and that x, y, and z are the coordinates of this position, x, y, and z are allocated to the central position. Assuming that the direction of a straight line extending from the central position (x, y, z) toward the object T forms an angle D defined by angle θ and angle φ, equation r(t) represents a straight line extending to one point on the object T. Equation r(t) is an equation of a simple straight line and represents the distance from the noted position to a black point of the body in the form of the origin o and td. With equation r(t), a variable R can be defined that represents the position of a point on the body by indicating a value by which a distance in the direction of angle D needs to be multiplied to reach the point, with origin o as the origin of coordinates.

In this example, the density of the body is used such that the definition that the body is present at locations with a high density is defined as σ(x) in order to estimate the surface of the body, and the distance to the surface of the object T can be defined by, for example, distance function S(r), which is an equation of integration. Distance function S(r) is an integrated value in function T(t). Function T(t) represents a shape assumed by the body disposed in the three-dimensional space and is intended to eliminate the influence of the far side of the body of interest as viewed from a specific viewpoint. Function T(t) is necessary because performing the function T(t) of integration allows for representing where the body is located when the distance function is three-dimensionally present and the body is viewed from a certain side plane. As a result of using such a function, when the object T is observed from a certain viewpoint, values are present only on the body surface, and low values are observed at the other portions of the space. In particular, a function indicating whether a body is present is provided, so that generating a neural network trained with the function allows for estimating a distance function as to what distance the surface of the shape of the body is three-dimensionally positioned at.

With respect to data generated through observation using LiDAR data, as a general rule, only data on the surface of an object T is stored in the form of point cloud data. In the second embodiment, however, the three-dimensional model 82 is stored in the storage unit 19 in the form of volume data in a function representation. The volume data has different characteristics from point clouds, and has advantages in terms of low data volume and the application to simulations such as impact analysis.

Furthermore, storing observation values in the form of volume data allows a methodology of volume rendering to be applied in the final outputting. For the method for outputting, various outputting methodologies can be used in accordance with what purpose the data obtained through observation is to be used for.

According to the model generation device 1 of the second embodiment, as described above, the three-dimensional model 82 represented by the implicit function can have a reduced data size, unlike in the first embodiment, in which generating a three-dimensional model converted into a form using, for example, voxels, meshes, or polygons leads to a massive data size. Thus, employing the neural network representation (implicit function representation) allows data on a three-dimensional model 82 to be downloaded fast when exchanging data on the three-dimensional model 82 (e.g., when downloading the three-dimensional model 82 via the Internet). As a result, a more convenient generation methodology can be achieved for, for example, improving the accuracy and reducing calculation costs when generating a three-dimensional model of an object T by using depth data obtained by measuring depths extending to the object T.

Although one embodiment of the present invention has been described, the present invention is not limited to the embodiments described above, and encompasses, for example, variations and improvements with which objects of the present invention can be achieved.

For example, although the above embodiments have been described on the assumption that N, the number of viewpoints P for which depth data is acquired, and M, the number of viewpoints P for which image data is acquired, are equal, the present invention is not particularly limited to this. In particular, the number N of viewpoints P for which depth data is acquired may be different from the number M of viewpoints P for which image data is acquired. In this case, for example, a depth model 80 is first generated from N pieces of depth data, and depth data is computed for M viewpoints P, which differ from the N viewpoints P, by using the depth model 80.

For example, depth data may be obtained directly by a sensor such as a lidar D performing observation, or may be estimated from other data. In particular, for example, rather than acquiring actual depth data or generating or updating a depth model 80 and acquiring depth data at M viewpoints P corresponding to image data, the depth-data acquisition unit 50 may acquire, from a depth model 80 prepared in advance, depth data at M viewpoints P corresponding to image data.

In the embodiments described above, for example, the camera C1 and the lidar D1 are each fixed by a prescribed jig in advance, and the relative positions of the camera C1 and the lidar D1 based on the prescribed jigs and the direction of measurement (line of sight) are calibrated so as to acquire depth data and image data from the same viewpoint. However, the present invention is not particularly limited to this. Thus, various types and forms of methodologies of calibration can be employed. Specifically, for example, position information pertaining to a viewpoint P at which image capturing has been performed using a camera C may be acquired and recorded using a technique such as the Global Positioning System (GPS), and then depth data may be acquired from the same viewpoint by a lidar D using the position information. Needless to say, it does not matter which of the camera C or the lidar D acquires data first.

For example, a depth model 80 may also be generated using a methodology for estimating depths from image data, such as Structure from Motion.

The functional block diagram depicted in FIG. 4 is merely exemplary, and the present invention is not particularly limited to this. In particular, the present invention can be implemented by providing the information processing system with functions or a database with which the entirety of the series of processes described above can be performed, and the present invention is not particularly limited to the example in FIG. 7 in terms of what type of functional blocks are to be used in order to implement the functions. The locations of the functional blocks and the database are not particularly limited to those in FIG. 4, and the functional blocks and the database can be positioned at any locations.

The series of processes described above can be executed by hardware or software. One functional block may be formed from a single piece of hardware, a single piece of software, or a combination thereof.

In a case where software performs the series of processes, a program forming the software is installed from a network or a recording medium into, for example, a computer. The computer may be incorporated into dedicated hardware. Alternatively, the computer may be one capable of performing various types of functions by being installed with various types of programs, e.g., server, general-purpose smartphone or personal computer.

Recording media including such a program are formed from, for example, removable media (not shown) distributed separately from device bodies in order to provide the program to users, or recording media provided to users in a state of being incorporated into device bodies in advance.

Steps herein for describing the program recorded in the recording media include, as a matter of course, processes that are performed in order in time series, and also include processes that are not necessarily performed in time series but performed in parallel or separately from each other. The term "system" herein means the entirety of devices formed from a plurality of devices and a plurality of means.

To sum up, the information processing system to which the present invention is applied can be implemented by providing the following configurations, and can provide various types and forms of embodiments. In particular, the information processing device (e.g., model generation device 1 in FIG. 6) to which the present invention is applied can be implemented by providing:

a depth data acquisition unit (e.g., depth-data acquisition unit 50 in FIG. 6) for acquiring, for each of N (N is an integer value of two or higher) viewpoints, a piece of depth data (e.g., depth data obtained thorough measurement by the lidars D1 and D2 in FIG. 7) indicating a depth from a prescribed viewpoint (e.g., viewpoints P1 and P2 in FIG. 7) to a feature point of an object (e.g., object T in FIG. 7); and
a distance function generation unit (e.g., implicit function generation unit 60 in FIG. 6) for generating, by performing prescribed machine learning (e.g., training based on a neural network such as the implicit function model 83) using the N pieces of depth data, a function (e.g., implicit function) for estimating the distance from an arbitrary viewpoint to a feature point on the surface of the object. Accordingly, a more convenient generation methodology can be achieved for,
for example, improving the accuracy and reducing calculation costs and the data size when generating a three-dimensional model of an object (e.g., object T in FIG. 7).

The distance function generation unit (e.g., implicit function generation unit 60 in FIG. 6) can perform training with a neural network (e.g., implicit function model 83 in FIG. 6) as the prescribed machine learning, and generate, as the function, an implicit function generated by the neural network (e.g., implicit function model 83 in FIG. 6).
The implicit function is a function indicated by the following (1),

$$S(\boldsymbol{r}) = \int_{ti}^{tn} T(t)\,\sigma\big(\boldsymbol{r}(t)\big)dt$$

$$T(t) = \exp\left(-\int_{ti}^{t} \sigma\big(\boldsymbol{r}(s)\big)ds\right)$$

```
                                        equations (1).
```

EXPLANATION OF REFERENCE NUMERALS

1: Model generation device, 2: User terminal, 11: CPU, 19: Storage unit, 21: Drive, 31: Removable medium, 50: Depth-data acquisition unit, 51: Actual-depth-data acquisition unit, 52: Depth-data estimation unit, 53: Surface labeling unit, 54: Image-data acquisition unit, 55: Three-dimensional model generation unit, 56: Display control unit, 60: Implicit function generation unit, 61: Three-dimensional model generation unit, 551: Block skip determination unit, 552: Color training unit, 80: Depth model, 81: Labeling data, 82: Three-dimensional model

**Claims**

1. An information processing device comprising:

   a depth data acquisition unit that acquires, for each of N (N is an integer value of two or higher) viewpoints, a piece of depth data indicating a depth from a prescribed viewpoint to a feature point of an object; and
   a distance function generation unit that generates, by performing prescribed machine learning using the N pieces of depth data, a function for estimating a depth from an arbitrary viewpoint to a feature point on a surface of the object.

2. The information processing device according to claim 1, wherein
   the distance function generation unit performs training with a neural network as the prescribed machine learning, and generates, as the function, an implicit function generated by the neural network.

3. The information processing device according to claim 2, wherein
   the implicit function is a function indicated by the following equations (1),

$$S(\boldsymbol{r}) = \int_{ti}^{tn} T(t)\,\sigma(\boldsymbol{r}(t))dt$$

$$T(t) = \exp\left(-\int_{ti}^{t} \sigma(\boldsymbol{r}(s))ds\right)$$

`equations (1).`

4. An information processing method comprising:

a depth data acquisition step of acquiring, for each of N (N is an integer value of two or higher) viewpoints, a piece of depth data indicating a depth from a prescribed viewpoint to a feature point of an object; and
a distance function generation step of generating, by performing prescribed machine learning using the N pieces of depth data, a function for estimating a distance from an arbitrary viewpoint to a feature point on a surface of the object.

5. A program for causing a computer to perform control processing comprising:

a depth data acquisition step of acquiring, for each of N (N is an integer value of two or higher) viewpoints, a piece of depth data indicating a depth from a prescribed viewpoint to a feature point of an object; and
a distance function generation step of generating, by performing prescribed machine learning using the N pieces of depth data, a function for estimating a distance from an arbitrary viewpoint to a feature point on a surface of the object.

FIG. 1

# FIG. 2

# FIG. 3

1

MODEL GENERATION DEVICE

| 11 | 12 | 13 | 14 |
|---|---|---|---|
| CPU | GPU | ROM | RAM |

15

16

INPUT-OUTPUT INTERFACE

| INPUT UNIT | OUTPUT UNIT | STORAGE UNIT | COMMUNICATION UNIT | DRIVE |
|---|---|---|---|---|
| 17 | 18 | 19 | 20 | 21 |

REMOVABLE MEDIUM

31

FIG. 4

MODEL GENERATION DEVICE 1

CPU 11

DEPTH-DATA ACQUISITION UNIT 50

ACTUAL-DEPTH-DATA ACQUISITION UNIT 51

DEPTH-DATA ESTIMATION UNIT 52

SURFACE LABELING UNIT 53

THREE-DIMENSIONAL MODEL GENERATION UNIT 55

BLOCK SKIP DETERMINATION UNIT 551

COLOR TRAINING UNIT 552

IMAGE-DATA ACQUISITION UNIT 54

DISPLAY CONTROL UNIT 56

COMMUNICATION UNIT 20

STORAGE UNIT 19

DEPTH MODEL 80

LABELING DATA 81

THREE-DIMENSIONAL MODEL 82

DEPTH METER D

CAMERA C

USER TERMINAL 2

EP 4 614 450 A1

FIG. 5

FIG. 6

## FIG. 7

EP 4 614 450 A1

# INTERNATIONAL SEARCH REPORT

| International application No. |
|---|
| **PCT/JP2023/042413** |

**A. CLASSIFICATION OF SUBJECT MATTER**

*G06T 17/30*(2006.01)i; *G06T 7/00*(2017.01)i
FI: G06T17/30; G06T7/00 350C

According to International Patent Classification (IPC) or to both national classification and IPC

**B. FIELDS SEARCHED**

Minimum documentation searched (classification system followed by classification symbols)

G06T17/30; G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | WEI, Yi et al. NerfingMVS: Guided Optimization of Neural Radiance Fields for Indoor Multi-view Stereo. NerfingMVS: Guided Optimization of Neural Radiance Fields for Indoor Multi-view Stereo. 17 October 2021, pp. 5590-5599<br>    in particular, [3.3. Guided Optimization of NeRF], fig. 3 | 1-2, 4-5 |
| Y | | 3 |
| X | YANG, Xingrui et al. Vox-Fusion: Dense Tracking and Mapping with Voxel-based Neural Implicit Representation. 2022 IEEE International Symposium on Mixed and Augmented Reality (ISMAR). 17 October 2022, pp. 499-507<br>    in particular, [4.1 Volume Renderer] | 1-2, 4-5 |
| Y | | 3 |
| Y | WANG, Peng et al. NeuS: Learning Neural Implicit Surfaces by Volume Rendering for Multi-view Reconstruction. arXiv. 16 December 2021, pp. 1-23, [online] [retrieved on 09 January 2024] Retrieved from the Internet: <URL: https://arxiv.org/abs/2106.10689v2><br>    in particular, [3.1 Rendering Procedure] | 3 |

✓ Further documents are listed in the continuation of Box C.     ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/042413** |

### C. DOCUMENTS CONSIDERED TO BE RELEVANT

| Category* | Citation of document, with indication, where appropriate, of the relevant passages | Relevant to claim No. |
| --- | --- | --- |
| Y | MILDENHALL, Ben et al. NeRF: representing scenes as neural radiance fields for view synthesis. Communications of the ACM. 17 December 2021, vol. 65, no. 1, pp. 99-106<br>in particular, [4. VOLUME RENDERING WITH RADIANCE FIELDS] | 3 |
| A | 池畑 諭, "三次元陰関数表現が切り開く三次元コンピュータビジョンの最前線 －ＮｅＲＦへ至る道と更にその先へ－", 電子情報通信学会誌, 01 May 2022, vol. 105, no. 5, pp. 375-380, (IKEHATA, Satoshi. The Journal of Institute of Electronics, Information and Communication Engineers.), non-official translation (The frontiers of 3D computer vision opened up by 3D implicit function representation - The road to NeRF and beyond -)<br>entire text, all drawings | 1-5 |
| A | GUPTA, Kamal et al. Improved Modeling of 3D Shapes with Multi-view Depth Maps. 2020 International Conference on 3D Vision (3DV). 25 November 2020, pp. 71-80<br>in particular, [3.1. Framework], fig. 2 | 1-5 |
| A | GUO, Haoyu et al. Neural 3D Scene Reconstruction with the Manhattan-world Assumption. 2022 IEEE/CVF Conference on Computer Vision and Pattern Recognition (CVPR). 18 June 2022, pp. 5501-5510<br>in particular, [3.1. Learning scene representations from images]-[3.3. Joint optimization of semantics and geometry] | 1-5 |
| P, X | WO 2023/171336 A1 (SONY GROUP CORP) 14 September 2023 (2023-09-14)<br>paragraphs [0043]-[0075], fig. 5-6 | 1-5 |

Form PCT/ISA/210 (second sheet) (January 2015)

**INTERNATIONAL SEARCH REPORT**
Information on patent family members

International application No.

**PCT/JP2023/042413**

| Patent document cited in search report | Publication date (day/month/year) | Patent family member(s) | Publication date (day/month/year) |
|---|---|---|---|
| WO 2023/171336 A1 | 14 September 2023 | (Family: none) | |

Form PCT/ISA/210 (patent family annex) (January 2015)

## REFERENCES CITED IN THE DESCRIPTION

**Patent documents cited in the description**

- JP 2010145186 A

**Non-patent literature cited in the description**

- **THOMAS M. et al.** Instant Neural Graphics Primitives with a Multiresolution Hash Encoding. *ACM Trans. Graph.*, July 2022, vol. 4 (4), 1-15, https://doi.org/10.1145/3528223.3530127